# EUROPÄISCHE PATENTSCHRIFT

(11) **EP 2 882 567 B1**
(45) Veröffentlichungstag und Bekanntmachung des Hinweises auf die Patenterteilung: **11.10.2017**
(21) Anmeldenummer: 13753265.1
(22) Anmeldetag: 18.07.2013
(51) Int. Cl.: B23P 15/10, F02F 3/18, F02F 3/00

(54) **VERFAHREN ZUR HERSTELLUNG EINES KOLBENS**
METHOD FOR PRODUCING A PISTON
PROCÉDÉ DE FABRICATION D'UN PISTON

(30) Priorität: 18.07.2012 DE 102012014194
(43) Veröffentlichungstag der Anmeldung: 17.06.2015
(73) Patentinhaber: MAHLE International GmbH, 70376 Stuttgart (DE)
(72) Erfinder: BOCZEK, Sascha-Oliver, 69234 Dielheim (DE); BISCHOFBERGER, Ulrich, 73732 Esslingen (DE); SCHARP, Rainer, 71665 Vaihingen (DE)
(74) Vertreter: Stumkat, Ulrich
(86) Internationale Anmeldenummer: PCT/DE2013/000404
(87) Internationale Veröffentlichungsnummer: WO 2014/012531

(56) Entgegenhaltungen:
- WO-A1-2013/029592
- WO-A1-2013/156442
- WO-A2-2012/079566
- FR-A- 880 033
- FR-A- 987 818
- US-A- 3 609 840
- US-A1- 2005 087 153

## Beschreibung

Die vorliegende Erfindung betrifft ein Verfahren zur Herstellung eines Kolbens für eine Brennkraftmaschine. Moderne Brennkraftmaschinen sind hinsichtlich ihrer Kolben hoch belastet, so dass diese üblicherweise aktiv gekühlt werden müssen. Eine derartige aktive Kühlung zur Reduzierung der Oberflächentemperaturen kann insbesondere durch in Kühlkanäle fortlaufend eingebrachtes Motoröl erzielt werden, das die Wärme beim Rückstrom in den Ölkreislauf abführt. Insbesondere bei Dieselmotoren sind dabei häufig Stahlkolben im Einsatz, wobei aufgrund der hohen Temperaturen im Brennraum die maximal ertragbaren Temperaturen des Kühlöls überschritten werden können, wodurch es dann zu einem frühzeitigen Degenerieren bzw. Verkoken des Kühlöls kommt. Die Folgen hiervon sind ein Ölkohleaufbau an einer Mantelfläche des Kühlkanals mit den weiter bekannten Auswirkungen auf den Kolben, wie beispielsweise dem Aufbau einer Isolationsschicht und einer weiteren Erhöhung der Temperatur des Kolbens. Hohe Temperaturen des Öls bedingen jedoch eine frühzeitige Ölalterung und einhergehend damit vergleichsweise kurze Ölwechselintervalle.

Bekannte Stahlkolben werden üblicherweise aus einem Kolbenoberteil und einem damit, beispielsweise über eine Reibschweißverbindung, verbundenen Kolbenunterteil gefertigt. Das Kolbenoberteil und das Kolbenunterteil schließen dabei in miteinander gefügtem Zustand einen umlaufenden Kühlkanal ein, der an seiner dem Kolbenboden abgewandten Unterseite eine Einspritz- und eine Ablauföffnung für Motoröl aufweist, das Wärme vom Kolben abführt.

Um eine Wärmeabfuhr bei höheren Temperaturen zu ermöglichen, als sie das Motoröl verträgt, sind Kolben geschaffen worden, die in einem vollständig geschlossenen Hohlraum eine Natrium-Kalium-Legierung enthalten, die im Betrieb durch Konvektion Wärme vom Kolbenboden weg transportiert. In einer zweiten Stufe wird die Wärme z.B. durch Anspritzen weiter vom Kolbenboden entfernter und nicht mehr so heißer Kolbenbereiche mit Motoröl auf bekannte Weise in den Ölkreislauf abgeführt.

Zum Einfüllen der Legierung in den geschlossenen Hohlraum muss nachträglich eine Einfüllöffnung geschaffen werden, die jedoch anschließend wieder verschlossen und später auch auf Dichtheit überprüft werden muss, um einen Austritt der hoch reaktiven Metalle zu verhindern. Hieraus resultieren zusätzliche Bearbeitungsschritte, wie beispielsweise das Bohren der Einfüllöffnung sowie zusätzliche Teile, wie beispielsweise externe Verschlussstopfen, was beides dazu beiträgt, die Herstellungskosten für einen derartigen Kolben zu erhöhen. Von besonderer Bedeutung hierbei ist zudem, dass der Kolben beim Befüllen einer besonders sorgsamen Handhabung bedarf, da der Kolben bereits fertig bearbeitet und daher äußerst anfällig für Beschädigungen ist.

Das Dokument WO 2013/156442 A1, das unter Artikel 54(3) EPÜ fällt, offenbart ein Verfahren zur Herstellung eines Kolbens insbesondere eines Stahlkolbens, für eine Brennkraftmaschine, mit folgenden Verfahrensschritte:
- Fertigen eines Kolbenoberteils und eines Kolbenunterteils, wobei das Kolbenoberteil und/ oder das Kolbenunterteil wenigstens eine Vertiefung aufweist,
- Einbringen eines bei Raumtemperatur festen oder pastösen und bei Betriebstemperatur des Kolbens flüssigen Wärmeübertragungsmediums, mit zumindest zwei Legierungselementen, insbesondere mit Natrium und Kalium, in wenigstens eine der Vertiefungen,
- Verschließen der wenigstens einen Vertiefung unter Bildung wenigstens eines geschlossenen Hohlraums, der das Wärmeübertragungsmedium enthält, und
- Verbinden des Kolbenoberteils mit dem Kolbenunterteil.

Die vorliegende Erfindung beschäftigt sich daher mit dem Problem, für ein Verfahren der gattungsgemäßen Art zur Herstellung eines Kolbens eine verbesserte Ausführungsform anzugeben, die insbesondere eine vereinfachte und zugleich rationelle Fertigung von Kolben ermöglicht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die vorliegende Erfindung beruht auf dem allgemeinen Gedanken, ein Wärmeübertragungsmedium zur konvektiven Kühlung eines Kolbens bereits vor dem eigentlichen Verbinden eines Kolbenoberteils mit einem Kolbenunterteil im festen Zustand in wenigstens eine Vertiefung in wenigstens einem der beiden Teile einzubringen. Anschließend wird das Wärmeübertragungsmedium in wenigstens einem geschlossenen Hohlraum eingeschlossen, der in dem Kolbenunterteil und/oder dem Kolbenoberteil gebildet wird, bevor oder während die beiden Teile miteinander verbunden werden. In einer bevorzugten Ausführungsform ist der geschlossene Hohlraum zwischen den beiden Teilen angeordnet, wobei das Verschließen des Hohlraums durch den Vorgang des Verbindens des Kolbenoberteils mit dem Kolbenunterteil selbst erfolgt. Dadurch kann ein nachträgliches Anbohren des Hohlraums ebenso wie ein Einfüllen von flüssigem Wärmeübertragungsmedium und ein Verschließen des Hohlraums entfallen. Beim erfindungsgemäßen Verfahren zur Herstellung eines Kolbens für eine Brennkraftmaschine werden somit in einem ersten Fertigungsschritt ein Kolbenoberteil und ein Kolbenunterteil hergestellt, wobei jedes der beiden Teile, zumindest aber eines von beiden, vorzugsweise das Kolbenunterteil, Vertiefungen zur Bildung eines geschlossenen Hohlraums besitzt. Anschließend erfolgt ein Einbringen eines bei Raumtemperatur festen oder pastösen, aber bei der Betriebstemperatur des Kolbens flüssigen Wärmeübertragungsmediums, insbesondere einer Metalllegierung, in die Vertiefungen des Kolbenunterteils und/oder des Kolbenoberteils, wobei sich das Wärmeübertragungsmedium erst später im Betriebszustand des Kolbens, das heißt also bei deutlich erhöhten Temperaturen, verflüssigt und durch Konvektion die Wärme insbesondere von dem Kolbenboden in andere Bereiche abführt. Dort kann die Wärme durch in der Fachwelt bekannte Kolbenkühlverfahren, wie z.B. direktes Anspritzen des Kolbens mit Motoröl oder durch einen fortlaufend mit Motoröl gespeisten offenen Kühlkanal in den Ölkreislauf abgeführt werden. Nach dem Einbringen des bei Raumtemperatur festen oder pastösen Wärmeübertragungsmedium in die Vertiefungen des Kolbenunterteils bzw. des Kolbenoberteils erfolgt das Verschließen der das Wärmeübertragungsmedium enthaltenden Vertiefungen zur Bildung des wenigstens einen geschlossenen Hohlraums und das Verbinden des Kolbenoberteils mit dem Kolbenunterteil.

Der Schritt des Verschließens kann als ein eigener Schritt z.B. durch das Einsetzen eines Trennelementes, wie z.B. eines Trennbleches, in eine Vertiefung zur Abtrennung des geschlossenen Hohlraums noch vor dem Schritt des Verbindens des Kolbenoberteils mit dem Kolbenunterteil erfolgen. Das Trennblech könnte unter Biegevorspannung abdichtend an den Wänden der Vertiefung anliegen und sich vorteilhafterweise an Vorsprüngen abstützen, um unter den einwirkenden Beschleunigungen sicheren Halt zu finden und das Wärmeübertragungsmedium sicher einzuschließen. Alternativ oder zusätzlich kann es mit der Wand verschweißt, verlötet oder verklebt sein. In einer anderen bevorzugten Ausführungsform kann der geschlossene Hohlraum erst beim Vorgang des Verbindens des Kolbenoberteils mit dem Kolbenunterteil zwischen diesen entstehen, z.B. als ein Zwischenraum zwischen zwei umlaufenden konzentrischen Reibschweißnähten.

Nach dem Verbinden der beiden Kolbenteile, beispielsweise durch eine Reibschweißverbindung, ist das bei Raumtemperatur pastöse bzw. feste Wärmeübertragungsmedium in dem allseits geschlossenen Hohlraum eingeschlossen, wobei eine Verflüssigung des Wärmeübertragungsmediums und damit auch die Möglichkeit zur Kühlung des Kolbens durch ein Hin- und Herschwappen des Wärmeübertragungsmediums im Hohlraum erst während des Betriebs der Brennkraftmaschine oder beispielsweise auch durch ein vorheriges Erhitzen des Kolbens erfolgt. Dabei kann nach einem Abkühlen des Kolbens, beispielsweise nach einem Abschalten der Brennkraftmaschine das Wärmeübertragungsmedium wieder einen festen Zustand einnehmen oder aber in einem flüssigen Zustand verbleiben, so dass das bei der Fertigung des Kolbens zunächst feste Wärmeübertragungsmedium durch Temperatureintrag flüssig wird und anschließend zumindest nahezu unabhängig von der Temperatur auch flüssig bleibt.

Letzteres kann in einer bevorzugten Ausführungsform erreicht werden, indem das Wärmeübertragungsmedium zwei oder mehr Elemente, wie z.B. Alkalimetalle, vorzugsweise Natrium und Kalium enthält, die ganz oder teilweise entmischt in eine oder mehrere Vertiefungen eingebracht werden und bei der Verarbeitungs- bzw. Raumtemperatur in einem festen oder pastösen Zustand vorliegen. Erst danach werden die Vertiefungen zu einem oder mehreren geschlossenen Hohlräumen verschlossen und das Ober- und Unterteil des Kolbens z.B. durch Reibschweißen verbunden.

Mit dem erfindungsgemäßen Verfahren erübrigen sich insbesondere die bisher erforderlichen und teuren weiteren Bearbeitungsschritte, wie beispielsweise das spätere Anbohren des geschlossenen Hohlraums, das Einfüllen des Wärmeübertragungsmediums in den Hohlraum durch die gebohrte Einfüllöffnung und das Verschließen der Einfüllöffnung sowie eine spätere Prüfung der Dichtheit dieses Verschlusses. Mit dem erfindungsgemäßen Verfahren lässt sich somit der Kolben deutlich vereinfacht und insbesondere rationeller und wirtschaftlicher herstellen, da nicht nur die genannten Arbeitsschritte entfallen können, sondern zudem auch ein bisher erforderliches Verschlusselement nicht mehr benötigt wird.

Bei einer vorteilhaften Weiterbildung der erfindungsgemäßen Lösung wird ein Wärmeübertragungsmedium mit lediglich einem einzigen geeigneten chemischen Element, vorzugsweise einem Alkalimetall, insbesondere mit Natrium, verwendet. Natrium weist beispielsweise einen Schmelzpunkt von ca. 98°C auf, so dass ein Übergang von der festen Form in die flüssige Form erst bei ca. 98°C erfolgt. Unterhalb dieser Temperatur ist Natrium fest, so dass dieses beispielsweise bei längeren Standzeiten der Brennkraftmaschine wieder einen festen Zustand einnehmen würde. Beim Betrieb der Brennkraftmaschine erhitzt sich der Kolben mit zunehmender Betriebsdauer, wobei das im Hohlraum eingeschlossene Natrium ab einer Temperatur von ca. 98°C flüssig wird und eine effektive Wärmeabfuhr vom Kolbenboden bewerkstelligen kann, bevor der Kolben zu heiß wird. Erfindungsgemäß wird ein Wärmeübertragungsmedium mit zumindest zwei verschiedenen Legierungselementen, insbesondere mit Natrium und Kalium, verwendet. Diese beiden Legierungselemente werden dabei zunächst in einem ganz oder teilweise entmischten bzw. getrenntem Zustand, d.h. elementar oder in unterschiedlich zusammengesetzten, jeweils bei Raumtemperatur festen Legierungen, räumlich getrennt in die Vertiefung(en) des Kühlkanals im Kolbenunterteil bzw. im Kolbenoberteil eingebracht, woraufhin erst das Verschließen der Vertiefung(en) zum geschlossenen Hohlraum sowie Verbinden des Kolbenoberteils mit dem Kolbenunterteil erfolgt. Kalium besitzt eine Schmelztemperatur von 63°C, wogegen Natrium eine Schmelztemperatur von ca. 98°C besitzt. Bis ca. 60°C sind somit beide Elemente in getrenntem Zustand fest. Demgegenüber liegt der Schmelzpunkt einer Natrium-Kalium-Legierung (NaK) wie auch allgemein der Schmelzpunkt von Legierungen anderer Metalle niedriger als die Schmelzpunkte der Einzelelemente und erreicht sein Minimum im Eutektikum, in diesem Beispiel mit NaK bei -12,6°C mit 22% Na. Allgemein ist die NaK-Legierung in einem weiten Bereich von Mischungsverhältnissen, nämlich z.B. mit etwa 10-60% Na, bei 20°C flüssig, während andere Mischungsverhältnisse und die beiden reinen Elemente fest vorliegen. In einer vorteilhaften Ausführungsform kann der Schmelzpunkt der Legierung im Betrieb durch eine Vermischung von zwei zunächst räumlich getrennten Stoffen unter die Raumtemperatur abgesenkt werden.

Wird der erfindungsgemäß hergestellte Kolben nun in der Brennkraftmaschine in Betrieb genommen, erhöht sich dessen Temperatur, wobei oberhalb der Schmelzpunkte der entmischten Einzelbestandteile des Kühlmittels diese Kalium flüssig werden und sich dadurch mit den übrigen Bestandteilen irreversibel mischen. Die hierbei entstehende Mischung aus Natrium und Kalium besitzt einen tieferen Schmelzpunkt als die ursprünglich eingebrachten Feststoffe, so dass das einmal gemischte Wärmeübertragungsmedium auch nach dem Abschalten der Brennkraftmaschine bei Raumtemperatur stets flüssig bleibt. Ein derartiges Natrium-Kalium-haltiges Wärmeübertragungsmedium besitzt eine hohe Wärmeübertragungsfähigkeit und besteht beispielsweise aus 40-90 Gew.-% Kalium und einem Rest Natrium, insbesondere aus 22 % Natrium und 78 % Kalium Selbstverständlich können eine Vielzahl von Elementen oder deren Legierungen in vielfältigen Mischungsverhältnissen eingesetzt werden, die für sich bei Raumtemperatur fest sind, bei Betriebstemperatur schmelzen und nach vollständiger Durchmischung vorzugsweise auch bei Raumtemperatur flüssig bleiben. Dem Natrium und Kalium könnte z.B. noch Cäsium zugesetzt werden, wobei eine dann entstehende Na-K-Cs-Legierung einen noch tieferen Schmelzpunkt von bis zu -78°C aufweist.

Bei einer weiteren vorteilhaften Ausführungsform der erfindungsgemäßen Lösung wird als Kühlmittel eine Galinstan®-Legierung mit den zunächst getrennten Legie-rungselementen Gallium, Indium und Zinn verwendet. Derartige Galinstan®-Legierungen sind üblicherweise bei Raumtemperatur flüssig und bestehen beispielsweise aus 65-95 Gew.-% Gallium, 5-26 Gew.-% Indium und 0-16 Gew.-% Zinn. Bevorzugte Legierungen sind beispielsweise solche mit 68-69 Gew.-% Gallium, 21-22 Gew.-% Indium und 9,5-10,5 Gew.-% Zinn. Eine derartige Legierung würde beispielsweise eine Schmelztemperatur von -19°C aufweisen. Alternativ ist auch eine Galinstan®-Legierung mit 62 Gew.-% Gallium, 22 Gew.-% Indium und 16 Gew.-% Zinn denkbar, die dann eine Schmelztemperatur von 10,7°C besitzt. Ebenfalls denkbar ist eine Legierung mit 59,6 Gew.-% Gallium, 26 Gew.-% Indium und 14,4 Gew.-% Zinn, also ein so genanntes ternäres Eutektikum mit einer Schmelztemperatur von 11°C.

Ebenfalls zum Einsatz können beispielsweise niedrigschmelzende Bismut-Legierungen kommen, wozu beispielsweise LBE (eutektische Bismut-Blei-Legierung mit einem Schmelzpunkt von 124°C gehört). Zu den niedrigschmelzenden Bismut-Legierungen gehören darüber hinaus: Roses Metall mit 50 Gew.-% Bismut, 28 Gew.-% Blei und 22 Gew.-% Zinn und mit einer Schmelztemperatur von 98°C, Orion-Metall mit 42 Gew.-% Bismut, 42 Gew.-% Blei und 16 Gew.-% Zinn und einem Schmelzpunkt von 108°C, Schnelllot mit 52 Gew.-% Bismut, 32 Gew.-% Blei und 16 Gew.-% Zinn und einem Schmelzpunkt von 96°C, d'Arcets-Metall mit 50 Gew.-% Bismut, 25 Gew.-% Blei und 25 Gew.-% Zinn, Woodsches Metall mit 50 Gew.-% Bismut, 25 Gew.-% Blei, 12,5 Gew.-% Zinn und 12,5 Gew.-% Cadmium und einer Schmelztemperatur von 71 °, Lipowitz-Metall mit 50 Gew.-% Bismut, 27 Gew.-% Blei, 13 Gew.-% Zinn und 10 Gew.-% Kadmium und einer Schmelztemperatur von 70°C, Harpers Metall mit 44 Gew.-% Bismut, 25 Gew.-% Blei, 25 Gew.-% Zinn und 6 Gew.-% Cadmium und einer Schmelztemperatur von 75°C, Cerrolow 117 mit 44,7 Gew.-% Bismut, 22,6 Gew.-% Blei, 19,1 Gew.-% Indium, 8,3 Gew.-% Zinn und 5,3 Gew.-% Kadmium und einem Schmelzpunkt von 47°C, Cerrolow 174 mit 57 Gew.-% Bismut, 26 Gew.-% Indium, 17 Gew.-% Zinn und einem Schmelzpunkt von 78,9°C, Fields Metal mit 32 Gew.-% Bismut, 51 Gew.-% Indium, 17 Gew.-% Zinn und einem Schmelzpunkt von 62°C sowie die Walker-Legierung mit 45 Gew.-% Bismut, 28 Gew.-% Blei, 22 Gew.-% Zinn und 5 Gew.-% Antimon.

Zweckmäßig ist der Hohlraum nur von etwa 5% bis zu etwa 33 %, vorzugsweise zu 10-15 %, mit dem Wärmeübertragungsmedium befüllt. Denkbar ist auch, dass das Volumen des im Hohlraum aufgenommenen Wärmeübertragungsmediums höchstens 10 % des Volumens des Hohlraums beträgt, was den großen Vorteil bietet, dass das Wärmeübertragungsmedium im Motorbetrieb dem so genannten Shaker-Effekt unterliegt, wobei es gegenläufig zur Hubrichtung des Kolbens im Hohlraum bewegt wird. Während des Abwärtshubes des Kolbens wird somit das Wärmeübertragungsmedium in Richtung des Kolbenbodens bewegt und kann Wärme aufnehmen, wogegen während des Aufwärtshubs des Kolbens das Wärmeübertragungsmedium in Richtung des Kolbenschaftes bewegt wird und dadurch die aufgenommene Wärme in Richtung dem Kolbenschaft ableiten kann, was die Kühlwirkung verbessert. Weitere wichtige Merkmale und Vorteile der Erfindung ergeben sich aus den Unteransprüchen, aus den Zeichnungen und aus der zugehörigen Figurenbeschreibung anhand der Zeichnungen.

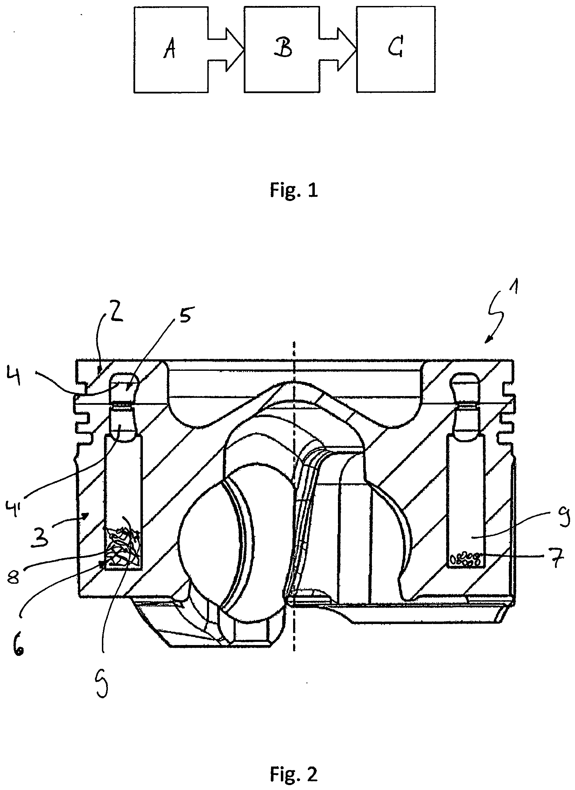

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Dabei zeigen, jeweils schematisch:
- Fig. 1: einen möglichen schematisierten Ablauf eines erfindungsgemäßen Verfahrens zur Herstellung eines Kolbens,
- Fig. 2: unterschiedliche Schnittdarstellungen durch den erfindungsgemäß hergestellten Kolben.
Entsprechend der Figur 1 weist ein erfindungsgemäßes Verfahren zur Herstellung eines Kolbens 1 (vergleiche Figur 2) zumindest drei Verfahrensschritte A, B und C auf. Im Verfahrensschritt A wird zunächst ein Kolbenoberteil 2 sowie ein Kolbenunterteil 3 gefertigt, jeweils mit einer Vertiefung 4, 4' zur Bildung eines dazwischen liegenden gemeinsamen geschlossenen Hohlraums. Der geschlossene Hohlraum 5 umfasst einen konzentrisch zur Kolbenachse umlaufenden, aus den Vertiefungen 4, 4' gebildeten Ringkanal ähnlich den bekannten, mit Motoröl gespeisten Kühlkanälen, weist jedoch keine Ein- oder Auslassöffnung auf.

Selbstverständlich ist dabei auch denkbar, dass eine Vertiefung 4, 4' ausschließlich im Kolbenoberteil 2 oder im Kolbenunterteil 3 vorgesehen wird. Im Verfahrensschritt B wird anschließend ein bei Raumtemperatur festes oder pastöses Wärmeübertragungsmedium 6, insbesondere eine Metalllegierung, in die Vertiefungen 4' des Kolbenunterteils 3 und/oder in die Vertiefungen 4 des Kolbenoberteils 2 eingebracht, wobei das Einbringen des Wärmeübertragungsmediums 6 üblicherweise ausschließlich in die Vertiefungen 4' des Kolbenunterteils 3 erfolgt. Das Wärmeübertragungsmedium 6 ist dabei derart ausgebildet, dass es sich erst im Betriebszustand des Kolbens 1, das heißt bei deutlich zur Raumtemperatur erhöhter Temperatur verflüssigt und dadurch die den Kolben 1 kühlende Shaker-Wirkung entfaltet. Im Verfahrensschritt C wird anschließend das Kolbenoberteil 2 mit dem Kolbenunterteil 3 fest verbunden und dadurch der geschlossene Ringkanal 5 hergestellt. Das Verbinden des Kolbenoberteils 2 mit dem Kolbenunterteil 3 kann beispielsweise mittels Reibschweißen oder mittels Kleben oder Löten erfolgen. Ist die Vertiefung 4' vergleichsweise flach, so könnte bereits bei einem Verschweißen der beiden Teile 2, 3 eine unerwünschte Verflüssigung des Wärmeübertragungsmediums 6 erfolgen.

Betrachtet man die Figur 2, so kann man erkennen, dass die Vertiefungen 4, 4' gemeinsam den umlaufenden Ringkanal bilden, wobei die Vertiefung 4' weiterhin sich in Axialrichtung im Kolbenunterteil 3 erstreckende, längliche Ausnehmungen 9 aufweist, die tischbeinartig von dem Ringkanal ausgehen, und damit partiell vergleichsweise tief ausgebildet sind. Wird dabei das bei Raumtemperatur feste oder pastöse Wärmeübertragungsmedium 6 in eine derartige "Tischbein"-Ausnehmung 9 eingefüllt, so reicht die beim Verschweißen des Kolbenoberteils 2 mit dem Kolbenunterteil 3 entstehende Wärme üblicherweise nicht zur Verflüssigung des Wärmeübertragungsmediums aus. Nach dem Verbinden des Kolbenoberteils 2 mit dem Kolbenunterteil 3 erfolgt eine Fertigbearbeitung des Kolbens 1. Der Kolben 1 ist üblicherweise aus Stahl ausgebildet.

Generell kann das Wärmeübertragungsmedium 6 lediglich ein einziges Element, beispielsweise Natrium 7 aufweisen, wobei das Natrium 7 erst beim Betrieb des Kolbens 1 und nach Überschreiten der Schmelztemperatur flüssig wird. Erfindungsgemäß weist das Wärmeübertragungsmedium 6 zumindest zwei Legierungselemente, beispielsweise Natrium 7 und Kalium 8, auf, wobei die beiden Legierungselemente 7, 8 in unterschiedliche Ausnehmungen 9 im Kolbenunterteil 3 eingefüllt werden. Alternativ könnten sie aber auch räumlich getrennt, z.B. übereinander in derselben Ausnehmung 9 oder in Bereichen des aus den Vertiefungen 4,4' gebildeten Ringkanals angeordnet werden. Im Betrieb des Kolbens 1 steigt dabei dessen Temperatur an, wobei bei Überschreiten der Schmelztemperatur von Kalium 8, das heißt bei Überschreiten von 63°C, sich dieses verflüssigt und dann mit dem Natrium 7 mischt, wodurch sich eine Natrium-Kalium-Legierung bildet, die bei einem geeigneten Mischungsverhältnis eine Schmelztemperatur unterhalb der Raumtemperatur, z.B. von -11°C besitzt, so dass diese Legierungsmischung auch nach dem Abkühlen des Kolbens 1 nicht unbedingt mehr erstarrt. Beim Herstellen einer eutektischen Natrium-Kalium-Legierung mit 22 % Natrium und 78 % Kalium sinkt der Schmelzpunkt sogar auf -12,6°C. Selbstverständlich können auch andere Mischungsverhältnisse und/oder weitere Legierungselemente, wie beispielsweise Cäsium, in die jeweiligen Vertiefungen 4' des Kolbenunterteils 3 bzw. in die zugehörigen Vertiefungen 4 des Kolbenoberteils 2 bei Raumtemperatur fester oder pastöser Form eingebracht werden, wobei eine Natrium-Kalium-Cäsium-Legierung mit 12 % Natrium, 47 Gew.-% Kalium und 41 Gew.-% Cäsium einen Schmelzpunkt von -78°C besitzt.

Weitere vorteilhafte Legierungen sind beispielsweise Galinstan®-Legierungen mit den zunächst getrennt eingefüllten Legierungselementen Gallium, Indium und Zinn sowie niedrigschmelzende Bismut-Legierungen.

Die Menge des im geschlossenen Hohlraum 5 aufgenommenen Wärmeübertragungsmediums 6 hängt dabei von seiner Wärmeleitfähigkeit und dem Grad der gewünschten Temperatursteuerung ab. Vorzugsweise beträgt das Volumen des im Hohlraum 5 aufgenommenen Wärmeübertragungsmediums 6 höchstens 10 % bzw. 10-15 % des Volumens des Hohlraums, was den großen Vorteil bietet, dass das Wärmeübertragungsmedium 6 im Motorbetrieb dem so genannten Shaker-Effekt unterliegt, wobei es gegenläufig zur Hubrichtung des Kolbens 1 im Hohlraum 5 bewegt wird. Während des Abwärtshubs des Kolbens 1 wird das Wärmeübertragungsmedium 6 in Richtung des Kolbenbodens bewegt und kann Wärme aufnehmen, während es beim Aufwärtshub des Kolbens 1 in Richtung des Kolbenschaftes bewegt wird und dadurch die aufgenommene Wärme in Richtung des Kolbenschafts ableiten kann.

Mit dem erfindungsgemäßen Verfahren zur vereinfachten und wirtschaftlichen Herstellung des Kolbens 1 lassen sich zumindest die nachstehenden Vorteile erzielen. Zunächst einmal kann ein nachträgliches Aufbohren des Hohlraums 5 und ein Einfüllen des Wärmeübertragungsmediums 6 sowie ein anschließendes Verschließen des Hohlraums 5 entfallen, wodurch nicht nur eine erhebliche Anzahl an separaten Bearbeitungsschritten vermieden werden kann, sondern zudem auch die Dichtheit des das Wärmeübertragungsmedium enthaltenden Hohlraums 5 langfristig gewährleistet werden kann, da ein unerwünschtes Öffnen des Verschlusses an der Einfüllöffnung nicht mehr auftritt. Ebenfalls entfallen können auch die die Einfüllöffnung verschließenden Teile, wie beispielsweise Verschlussstopfen, wodurch die Fertigungskosten und auch die Lager- und Logistikkosten reduziert werden können. Weiterhin muss auch nicht auf eine sorgsame Handhabung des Kolbens 1 bei der Befüllung des Hohlraums 5 mit Wärmeübertragungsmedium 6 geachtet werden, da die Fertigbearbeitung des Kolbens 1 erst nach dem Einfüllen und nicht wie bisher zuvor erfolgt.

## Patentansprüche

1. Verfahren zur Herstellung eines Kolbens (1), insbesondere eines Stahlkolbens, für eine Brennkraftmaschine mit
folgenden Verfahrensschritten:
- Fertigen eines Kolbenoberteils (2) und eines Kolbenunterteils (3), wobei das Kolbenoberteil (2) und/oder das Kolbenunterteil (3) wenigstens eine Vertiefung (4, 4') aufweist,
- Einbringen eines bei Raumtemperatur festen oder pastösen und bei Betriebstemperatur des Kolbens flüssigen Wärmeübertragungsmediums (6) mit zumindest zwei Legierungselementen, insbesondere mit Natrium (7) und Kalium (8), in wenigstens eine der Vertiefungen (4,4'),
- Verschließen der wenigstens einen Vertiefung (4, 4') unter Bildung wenigstens eines geschlossenen Hohlraums (5), der das Wärmeübertragungsmedium (6) enthält, und
- Verbinden des Kolbenoberteils (2) mit dem Kolbenunterteil (3), wobei die zumindest zwei Legierungselemente des Wärmeübertragungsmediums (6) in unterschiedlicher Zusammensetzung in zumindest zwei räumlich getrennte Bereiche der wenigstens einen Vertiefung (4, 4') des Kolbenunterteils (3) und/oder des Kolbenoberteils (2) eingebracht werden und bei dem Verschließen innerhalb eines gemeinsamen geschlossenen Hohlraums (5) eingeschlossen werden.

2. Verfahren nach Anspruch 1,
**dadurch gekennzeichnet,**
**dass** das Verschließen der wenigstens einen Vertiefung (4, 4') beim Verbinden des Kolbenoberteils (2) mit dem Kolbenunterteil (3), insbesondere durch Reibschweißen, erfolgt, wobei der geschlossene Hohlraum (5) zwischen dem Kolbenoberteil (2) und dem Kolbenunterteil (3) angeordnet ist.

3. Verfahren nach Anspruch 1,
**dadurch gekennzeichnet,**
**dass** das Verschließen der wenigstens einen Vertiefung (4, 4') durch Einsetzen eines Trennelementes in die Vertiefung (4, 4') erfolgt, bevor das Kolbenoberteil (2) mit dem Kolbenunterteil (3) verbunden wird.

4. Verfahren nach einem der Ansprüche 1 bis 3,
**dadurch gekennzeichnet,**
- **dass** ein Kühlmittel (6) mit zwei oder mehr Alkalimetallen (7, 8) verwendet wird, oder
- **dass** eine Galinstan®-Legierung mit Gallium, Indium und Zinn verwendet wird, oder
- **dass** eine Bismut-Legierung verwendet wird.

5. Verfahren nach einem der Ansprüche 1 bis 4,
**dadurch gekennzeichnet,**
**dass** der Kolben (1) nach dem Verbinden des Kolbenoberteils (2) mit dem Kolbenunterteil (3) fertig bearbeitet wird.

6. Verfahren nach einem der Ansprüche 1 bis 5, **dadurch gekennzeichnet, dass** der Hohlraum (5) zu 5-33%, insbesondere zu 10-15%, mit dem Wärmeübertragungsmedium (6) befüllt wird.

## Claims

1. A process for producing a piston (1), in particular a steel piston, for an internal combustion engine with
the following process steps:
- Manufacturing a piston top (2) and a piston end (3), the piston top (2) and/or the piston end (3) having at least one recess (4, 4'),
- Introducing, into at least one of the recesses (4,4'), a heat transfer medium (6) that is solid or pasty at room temperature and liquid at the piston's operating temperature and that has at least two alloying elements, in particular sodium (7) and potassium (8),
- Sealing the at least one recess (4, 4') to form at least one closed hollow space (5) that contains the heat transfer medium (6); and
- Connecting the piston top (2) with the piston end (3),
wherein
the at least two alloying elements of the heat transfer medium (6) are introduced, in different compositions, into at least two spatially separated areas of the at least one recess (4, 4') of the piston end (3) and/or the piston top (2) and are enclosed within a common closed hollow space (5) when it is sealed.

2. A process according to claim 1,
**characterized in that**
the at least one recess (4, 4') is sealed when the piston top (2) is connected with the piston end (3), in particular by friction welding, the closed hollow space (5) being arranged between the piston top (2) and the piston end (3).

3. A process according to claim 1,
**characterized in that**
the at least one recess (4, 4') is sealed by insertion of a separating element into the recess (4, 4') before the piston top (2) is connected with the piston end (3).

4. A process according to any one of claims 1 through 3,
**characterized in that**
- a coolant (6) with two or more alkali metals (7, 8) is used, or that
- a Galinstan^{®} alloy with gallium, indium, and tin is used,
or that
- a bismuth alloy is used.

5. A process according to any one of claims 1 through 4,
**characterized in that**
the piston (1) is finished after the piston top (2) is connected with the piston end (3).

6. A process according to any one of claims 1 through 5, **characterized in that** the hollow space (5) is 5-33% filled, especially 10-15% filled, with the heat transfer medium (6).

## Revendications

1. Procédé de fabrication d'un piston (1), notamment d'un piston en acier pour un moteur à combustion interne, avec
les étapes de procédé suivantes :
- la fabrication d'une partie supérieure de piston (2) et d'une partie inférieure de piston (3), où la partie supérieure de piston (2) et/ou la partie inférieure de piston (3) présentent au moins une cavité (4, 4'),
- l'apport d'un milieu caloporteur (6) solide ou pâteux à la température ambiante ou liquide à la température de fonctionnement du piston avec au moins deux éléments d'alliage, notamment avec du sodium (7) et du potassium (8), dans au moins l'une des cavités (4, 4'),
- la fermeture de l'au moins une cavité (4, 4') moyennant la formation d'un espace creux (5) fermé qui contient le milieu caloporteur (6), et
- la jonction de la partie supérieure de piston (2) avec la partie inférieure de piston (3),
où les au moins deux éléments d'alliage du milieu caloporteur (6) sont apportés en différentes compositions dans au moins deux régions séparées dans l'espace de l'au moins une cavité (4, 4') de la partie inférieure de piston (3) et/ou de la partie supérieure de piston (2) et sont enfermées à l'intérieur d'un espace creux (5) fermé commun lors de la fermeture.

2. Procédé selon la revendication 1,
**caractérisé en ce**
**que** la fermeture de l'au moins une cavité (4, 4'), lors de la jonction de la partie supérieure de piston (2) avec la partie inférieure de piston (3), a lieu notamment par soudage par friction, où l'espace creux (5) fermé est disposé entre la partie supérieure de piston (2) et la partie inférieure de piston (3).

3. Procédé selon la revendication 1,
**caractérisé en ce que** la fermeture de l'au moins une cavité (4, 4') a lieu par insertion d'un élément de séparation dans la cavité (4, 4') avant que la partie supérieure de piston (2) ne soit jointe avec la partie inférieure de piston (3).

4. Procédé selon l'une des revendications 1 à 3,
**caractérisé en ce**
- **qu'**un moyen de refroidissement (6) avec deux ou plusieurs métaux alcalins (7, 8) est employé, ou
- **qu'**un alliage Galinstan® avec du gallium, de l'indium et de l'étain est employé, ou
- **qu'**un alliage de bismuth est employé.

5. Procédé selon l'une des revendications 1 à 4,
**caractérisé en ce**
**que** le piston (1) est parachevé après la jonction de la partie supérieure de piston (2) avec la partie inférieure de piston (3)..

6. Procédé selon l'une des revendications 1 à 5, **caractérisé en ce que** l'espace creux (5) est rempli avec le milieu caloporteur (6) à raison de 5 à 33 %, notamment à raison de 10 à 15 %.
